# EUROPEAN PATENT SPECIFICATION

(11) **EP 0 840 547 B1**
(45) Date of publication and mention of the grant of the patent: **21.11.2001**
(21) Application number: 97923317.8
(22) Date of filing: 20.05.1997
(51) Int. Cl.: A01J 5/017, A01K 1/12, A01K 13/00

(54) **A CONSTRUCTION INCLUDING AN ACCOMMODATION FOR ANIMALS**
KONSTRUKTION MIT UNTERBRINGUNGSBOX FÜR TIERE
STRUCTURE COMPRENANT UNE STALLE POUR UN ANIMAL

(30) Priority: 23.05.1996 EP 96201447
(43) Date of publication of application: 13.05.1998
(60) Divisional application: 01201748.9
(73) Proprietor: MAASLAND N.V., 3155 PD Maasland (NL)
(72) Inventor: VAN DER LELY, Cornelis, CH-6300 Zug (CH)
(74) Representative: Corten, Maurice Jean F.M.
(86) International application number: PCT/NL97/00278
(87) International publication number: WO 97/43897

(56) References cited:
- EP-A- 0 091 892
- EP-A- 0 630 558
- EP-A- 0 634 097
- EP-A- 0 638 232

## Description

The invention relates to a construction including an accommodation for animals, such as cows comprising a massage member.

Such a construction is known from EP-A-0 091 892.

It is important, however, that the animals feel at ease in the accommodation, as this may increase the milk production and reduce the percentage of diseases of the animals. Therefore, the invention aims at arranging the accommodation in such a manner that the animals feel at ease there.

In accordance with the invention, this will be achieved in that the accommodation comprises a massage member and a brushing member for automatically massaging or brushing an animal simultaneously and/or alternately. Massaging the animal stimulates the milk yield, while the skin of the animal is kept clean by brushing. According to a preferred embodiment, the massage member is designed in such a way that the animal is massaged automatically at its upper side and/or underside and/or rear side.

According to a preferred embodiment, the accommodation comprises at least one milk box and the massage member and/or the brushing member are/is disposed on the milk box or near thereto in such a manner that it will be possible to massage or brush the rear end of the animal. In this way it will be possible to milk the animal during massaging or brushing.

In order to render the massage as pleasant as possible for the animal, in accordance with a preferred embodiment, the massage member comprises a massage element which is made of flexible material, such as synthetic material or rubber. In accordance with a further preferred embodiment, it will be possible to stimulate an animal additionally in that the massage and/or the brushing member comprise(s) a device by means of which it will be possible, in a cold season, to supply automatically warm air, water or oil during massaging and/or brushing.

In order to have the massage and the brushing carried out automatically, in accordance with a further preferred embodiment, the massage member and the brushing member comprise a robot arm construction by means of which it will be possible automatically to massage and/or brush the animal from its head to its rear end. According to a further preferred embodiment, the massage element and the brush are disposed near the end of a robot arm construction. In order to ensure that the massage element will be capable of adapting itself to the contours of the animal, according to a further preferred embodiment, the massage element is connected to the robot arm construction via a hinge. In accordance with a further preferred embodiment, the hinge is produced as a ball-and-socket joint comprising stop means with the aid of which the strike which the massage element is allowed to make relative to the robot arm construction is limited.

For the purpose of stimulating the animal even more intensively, according to a preferred embodiment, the surface of the massage element is produced as a profiled one. In a preferred embodiment in accordance with the invention, the profiled surface is constituted by ribs and/or knobs.

In accordance with a further preferred embodiment, the robot arm construction is disposed near the side of the milk box. According to a further preferred embodiment, the robot arm construction is fastened to the frame of the milk box. In order to make it possible to massage and/or brush the animal over its entire length, in accordance with a preferred embodiment, the construction comprises a longitudinal guide means, such as a rail, across which the massage member and/or the brushing member can be moved in the longitudinal direction of the animal. According to a further preferred embodiment, the massage member is provided with drive means with the aid of which the massage element can be set vibrating. In accordance with a preferred embodiment, there is disposed, near the end of the robot arm construction, a rotatably driven brush. According to again an other preferred embodiment, the massage element and a brush are capable of being driven at a variable speed. In order to make it possible that the animal is massaged and/or brushed on both sides, according to a preferred embodiment, on both sides of the milk box there are/is arranged a massage member and/or a brushing member.

In accordance with a further preferred embodiment, the construction comprises a computer which establishes whether an animal has much or little need for being massaged or cleaned by brushing for a short or a long time. According to an other preferred embodiment, the construction comprises a computer which has been programmed in such a manner that it is known whether the cow will be milked more or less quickly when being brushed or massaged or not. According to again an other preferred embodiment, the construction comprises a computer which has been programmed so as to record whether massaging has a more favourable influence on the cow than brushing. According to a further preferred embodiment, the construction comprises a computer which has been programmed in such a manner that it will be possible to establish, on the basis of milk samples, whether the massage and/or the brushing are/is carried out satisfactorily.

According to an other preferred embodiment, the rear side of the animal can be massaged by means of an element which is driven in a diabolically rotating manner.

The invention further relates to a method of stimulating the milk yield of an animal to be milked, in which method, after an animal has occupied a box, the animal will optionally first be massaged automatically by means of a massage member or will first be brushed by means of a brushing member, or the animal will be massaged and brushed at the same time. According to a further preferred embodiment, during massaging and/or brushing an animal, teat cups are connected to the teats of the animal to be milked and the animal is subsequently milked. It has appeared that brushing and/or massaging result(s) in a quicker initiation of the milk flow of the animal. According to a preferred embodiment, the teat cups are automatically connected to the teats of an animal to be milked by means of a milking robot. According to a further preferred embodiment, by means of the massage member the animal is massaged beside the udder, preferably in front thereof. In accordance with a preferred embodiment, the massage member massages the rear end of the animal. According to a preferred embodiment, the brush is moved from the upper side of the back of an animal downwards until the abdomen of the animal. According to a preferred embodiment, after the brush has reached the abdomen of the animal, the number of revolutions at which the brush is rotating is automatically increased and the brush is subsequently moved back along the animal until the upper side of its back. In accordance with a preferred embodiment, the brushing member is automatically moved in the longitudinal direction of the animal for the purpose of brushing the animal stripwise. According to again an other preferred embodiment, the computer defines the duration of the massage depending on the type of animal.

For a better understanding of the invention, reference will now be made to the accompanying drawings, in which:
Figure 1 shows a side view of a box in which there are disposed massage members and brushing members;
Figure 2 shows a rear view of the box according to the line II-II in Figure 1;
Figure 3 shows to an enlarged scale a plan view of a massage element according to the arrow III in Figure 1;
Figure 4 is a cross-section of the massage element according to the line IV-IV in Figure 3, and
Figure 5 shows a rear view of an alternative box in which there is disposed one massage member.

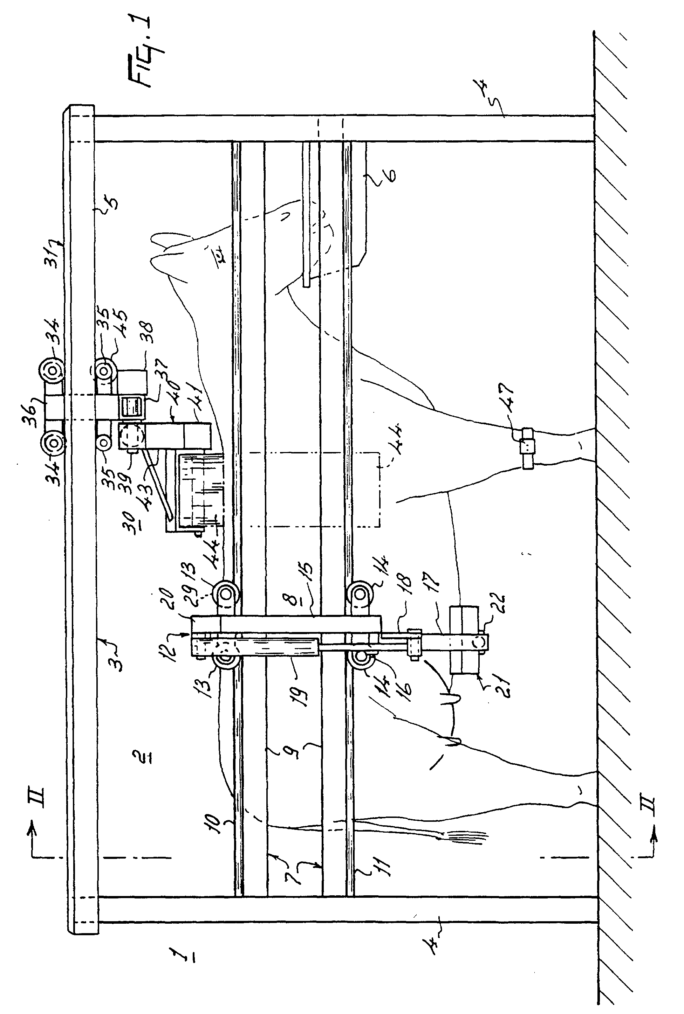

Figure 1 shows a side view of an accommodation 1 for animals in which there is disposed a box 2. The box 2 comprises a frame 3 including stands 4 and joists 5 (Figure 1, 2). On the frame 3 there is further disposed a feed trough 6 in which fodder, such as concentrate, can be dispensed to the animals in the box 1 by means of a (non-shown) concentrate rationing system. The box 2 is further provided with a (non-shown) animal identification system by means of which an animal can be identified. For that purpose the animals are provided with a band 47 disposed around the leg, which band 47 comprises a responder that communicates with the animal identification system.

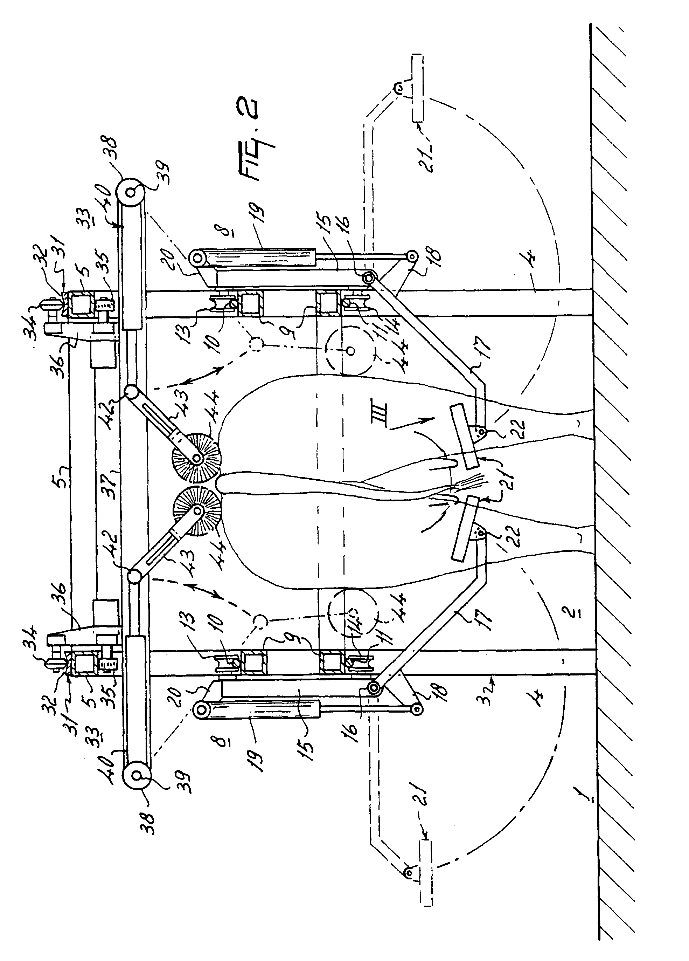

Between the stands 4, on both sides of the box 2 at approximately half the height of the box 2, there is disposed a longitudinal guide means 7 for a massage member 8. The longitudinal guide means 7 comprises two spaced apart box girders 9, of which the upper box girder 9 is provided at its upper side with a profiled edge 10 and the lower box girder 9 is provided at its lower side with a profiled edge 11. On the longitudinal guide means 7 there is disposed a robot arm construction 12 pertaining to the massage member 8. By means of an upper pair of wheels 13 and a lower pair of wheels 14 the robot arm construction 12 is suspended so as to be movable across the profiled edges 10, 11. Between the pairs of wheels 13 and 14 there is disposed a vertical beam 15, provided at its lower side with an arm 17 that is pivotable about a horizontal shaft 16. Near the horizontal shaft 16 the pivotable arm 17 is provided with a lever 18 whose end is rotatably coupled with a vertically arranged cylinder 19 whose other end is also rotatably connected to a lug 20 fastened to the vertical beam 15. Near its end the arm 17 is provided with a massage element 21. In Figures 3 and 4 the massage element 21 is shown to an enlarged scale. The massage element 21 is connected to the arm 17 via a ball-and-socket joint 22. The ball-and-socket joint 22 is provided with (non-shown) blocking means, with the aid of which the strike which the massage element 21 is allowed to make relative to the arm 17 is limited. The massage element 21 comprises a square massage plate 23 made of a flexible material, such as rubber or synthetic material. The massage plate 23 is provided at its upper side with knobs 24. The massage element 21 can be set vibrating by means of a drive 25 disposed under the massage plate 23. The massage member 8 is further provided with a spraying device 26 by means of which warm or cold air, water or oil can be supplied to the massage element 21. The spraying device 26 comprises a spraying nozzle 27 disposed in the centre of the massage plate 23. Via a line 28 disposed in the arm 17 the warm or cold air, water, oil can be supplied to the spraying nozzle 27.

By means of the cylinder 19 the massage element 21 can be pivoted from its position outside the box indicated by broken lines to under the abdomen of an animal. By means of a motor 29 disposed on the upper pair of wheels 13 the massage member 8 can be moved in the longitudinal direction of the box 2 across the longitudinal guide means 7. It will thus be possible to massage the udder of the animal and every place desired therearound by means of the massage element 21.

As shown in Figures 1 and 2, the box 2 is further provided on both sides with a brushing member 30. The brushing member 30 is also movable in the longitudinal direction of the box 2 across a further longitudinal guide means 31 disposed on the frame 3 of the box 2. The further longitudinal guide means 31 comprises a profiled edge 32 disposed on the joists 5. The brushing member 30 comprises a further robot arm construction 33 which can be moved across the further longitudinal guide means 31 in the longitudinal direction of the milk box 2 by means of an upper pair of wheels 34 and a lower pair of wheels 35. Between the upper pair of wheels 34 and the lower pair of wheels 35 there is arranged a vertically extending box girder 36. At the lower end of the box girder 36 there is arranged a box girder 37 which is in a horizontal position and which extends from the box 2 in outward direction. At the end of the horizontal box girder 37 there is arranged a step motor 38 provided with a horizontal shaft 39, which is firmly connected with a telescoping arm 40. At the end of the telescoping arm 40 there is disposed a second step motor 41 which is also provided with a horizontal shaft 42 connected with a further arm 43. At the end of the further arm 43 there is disposed a rotatably driven brush 44. The brush 44 is driven by a (non-shown) motor which is capable of being driven in two directions at a variable number of revolutions. By means of the aforementioned step motor and the telescoping arm 40 the brush 44 can be moved along the trunk of the animal from the position shown in bold lines in Figure 2 until the schematically shown position. By means of a step motor 45 disposed on the lower pair of wheels 25 it is possible to move the brush member 30 in the longitudinal direction of the box.

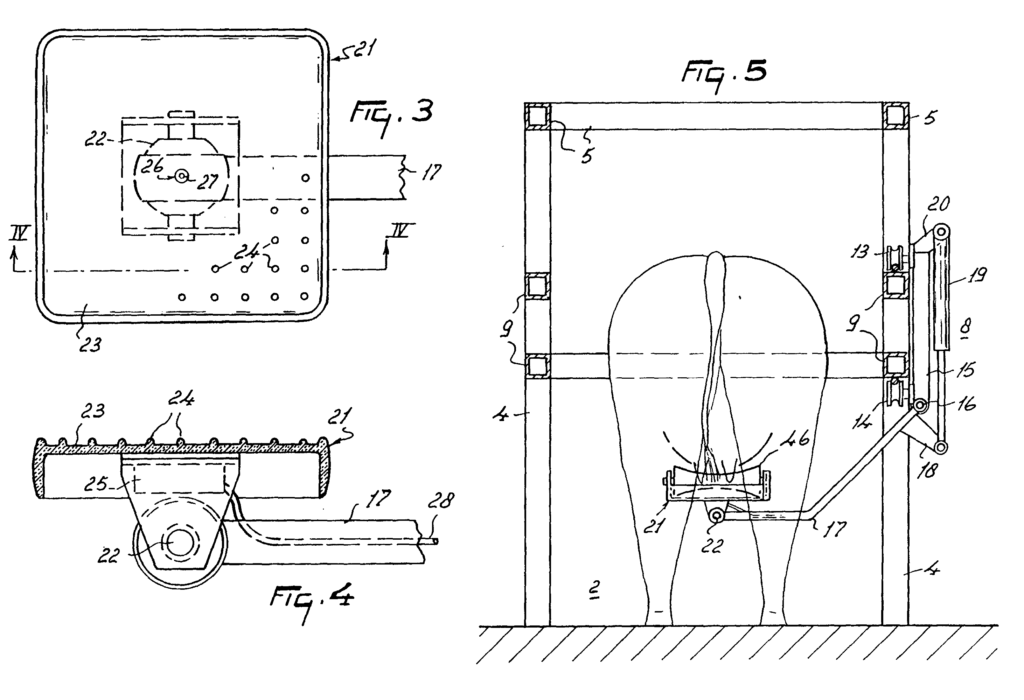

Figure 5 represents a further embodiment of a massage member 8 in accordance with the invention. Elements corresponding with those of the first embodiment are indicated by the same reference numerals. In Figure 5 the massage element 21 of the massage member 8 is designed as a diabolic roller element 46. By means of a (non-shown) motor the diabolic roller element 46 can be driven in two directions. With the aid of the diabolic roller element 46 the rear side of the animal can be massaged. It will also be possible to set the diabolic roller element 46 vibrating. In a (non-shown) embodiment it will be possible as well to move the diabolic roller element 46 vertically along the rear side of the animal.

## Claims

1. A construction including an accommodation (1) for animals, such as cows comprising a massage member, **characterized in that** the accommodation (1) comprises the massage member (8) and a brushing member (30) for automatically massaging or brushing an animal simultaneously and/or alternately.

2. A construction as claimed in claim 1, **characterized in that** the massage member (8) is designed in such a way that the animal is massaged automatically at its upper side and/or underside and/or rear side.

3. A construction as claimed in any one of the preceding claims, **characterized in that** the accommodation (1) comprises at least one milk box (2), and the massage member (8) and/or the brushing member (30) are/is disposed on the milk box (2) or near thereto in such a manner that it will be possible to massage or brush the rear end of the animal.

4. A construction as claimed in any one of the preceding claims, **characterized in that** the massage member (8) comprises a massage element (21) which is made of flexible material, such as synthetic material or rubber.

5. A construction as claimed in any one of the preceding claims, **characterized in that** the massage and/or the brushing member (8, 30) comprise(s) a device (26) by means of which it will be possible, in a cold season, to supply automatically warm air, water or oil during massaging and/or brushing.

6. A construction as claimed in any one of the preceding claims, **characterized in that** the massage member (8) and the brushing member (30) comprise a robot arm construction (12, 23) by means of which it will be possible to massage and/or brush an animal automatically from its head to its rear end.

7. A construction as claimed in claim 6, **characterized in that** the massage element (21) and the brush (44) are disposed near the end of the robot arm construction.

8. A construction as claimed in claim 7, **characterized in that** the massage element (21) is connected to the robot arm construction (12) via a hinge (22) so as to be capable of adapting itself to the unevennesses of the body of the animal.

9. A construction as claimed in claim 8, **characterized in that** the hinge (22) is a ball-and-socket joint comprising stop means with the aid of which the strike which the massage element (21) is allowed to make relative to the robot arm construction (12) is limited.

10. A construction as claimed in any one of the preceding claims, **characterized in that** the massage element (21) has a profiled surface.

11. A construction as claimed in claim 10, **characterized in that** the profiled surface is constituted by ribs and/or knobs (24).

12. A construction as claimed in any one of the preceding claims, **characterized in that** the robot arm construction (12, 33) is disposed near the side of the milk box (2).

13. A construction as claimed in claim 12, **characterized in that** the robot arm construction (12, 33) is fastened to the frame (3) of the milk box (2).

14. A construction as claimed in any one of the preceding claims, **characterized in that** the construction comprises a longitudinal guide means (7, 31), such as a rail, across which the massage member (8) and/or the brushing member (30) can be moved in the longitudinal direction of the animal.

15. A construction as claimed in any one of the preceding claims, **characterized in that** the massage member (8) is provided with drive means (25) with the aid of which the massage element (21) can be set vibrating.

16. A construction as claimed in claim 6 or any one of claims 12 to 14, **characterized in that** there is disposed, near the end of the robot arm construction (33), a rotatably driven brush (44).

17. A construction as claimed in claim 15 or 16, **characterized in that** the brush and the massage element (44, 21) are capable of being driven at a variable speed.

18. A construction as claimed in any one of the preceding claims, **characterized in that** on both sides of the milk box (2) there are/is arranged a massage member (8) and/or a brushing member (30).

19. A construction as claimed in any one of the preceding claims, **characterized in that** the construction comprises a computer which establishes whether an animal has much or little need for being massaged or cleaned by brushing for a short or a long time.

20. A construction as claimed in any one of the preceding claims, **characterized in that** the construction comprises a computer which has been programmed in such a manner that it is known whether the cow will be milked more or less quickly when being brushed or massaged or not.

21. A construction as claimed in any one of the preceding claims, **characterized in that** the construction comprises a computer which has been programmed so as to record whether the massage has a more favourable influence on the cow than the brushing.

22. A construction as claimed in any one of the preceding claims, **characterized in that** the construction comprises a computer which has been programmed in such a manner that it will be possible to establish, on the basis of milk samples, whether the massage and/or the brushing are/is carried out satisfactorily.

23. A method of stimulating the milk yield of an animal, in which method, after an animal has occupied a box, the animal will optionally first be massaged automatically by means of a massage member (8) or will first be brushed.

24. A method as claimed in claim 23, **characterized in that**, during massaging and/or brushing the animal, teat cups are connected to the teats of the animal to be milked and the animal is subsequently milked.

25. A method as claimed in claim 23 or 24, **characterized in that** the teat cups are automatically connected to the teats of the animal to be milked by means of a milking robot.

26. A method as claimed in any one of claims 23 to 25, **characterized in that** by means of the massage member (8) the animal is massaged beside the udder.

27. A method as claimed in any one of claims 23 to 26, **characterized in that** the massage member (8) massages the rear end of the animal.

28. A method as claimed in any one of claims 23 to 27, **characterized in that** the brush (44) is moved from the upper side of the back of the animal downwards until the abdomen of the animal.

29. A method as claimed in claim 28, **characterized in that**, after the brush (44) has reached the abdomen of the animal, the number of revolutions at which the brush (44) is rotating is automatically increased, and the brush (44) is subsequently moved back along the animal until the upper side of its back.

30. A method as claimed in claim 28 or 29, **characterized in that** the massage member (8) massages automatically, while the duration of the massage is defined by the computer, depending on the type of animal.

## Patentansprüche

1. Vorrichtung mit einer Unterkunft (1) für Tiere, wie z. B. Kühe, die eine Massagevorrichtung umfaßt,
**dadurch gekennzeichnet, daß** die Unterkunft (1) die Massagevorrichtung (8) und eine Bürstvorrichtung (30) umfaßt, um ein Tier gleichzeitig und/oder abwechselnd automatisch zu massieren oder zu bürsten.

2. Vorrichtung nach Anspruch 1,
**dadurch gekennzeichnet, daß** die Massagevorrichtung (8) derart ausgebildet ist, daß das Tier an seiner Oberseite und/oder Unterseite und/oder Rückseite automatisch massiert wird.

3. Vorrichtung nach einem der vorhergehenden Ansprüche,
**dadurch gekennzeichnet, daß** die Unterkunft (1) mindestens eine Melkbox (2) umfaßt, und daß die Massagevorrichtung (8) und/oder die Bürstvorrichtung (30) auf oder nahe der Melkbox (2) derart angeordnet sind/ist, daß es möglich ist, das hintere Ende des Tieres zu massieren oder zu bürsten.

4. Vorrichtung nach einem der vorhergehenden Ansprüche,
**dadurch gekennzeichnet, daß** die Massagevorrichtung (8) ein Massageelement (21) umfaßt, das aus einem elastischen Material, wie z. B. Kunststoff oder Gummi, hergestellt ist.

5. Vorrichtung nach einem der vorhergehenden Ansprüche,
**dadurch gekennzeichnet, daß** die Massage- und/oder die Bürstvorrichtung (8, 30) eine Vorrichtung (26) umfassen/umfaßt, mittels der es möglich ist, bei kalter Witterung während des Massierens und/oder Bürstens automatisch warme Luft, Wasser oder Öl zuzuführen.

6. Vorrichtung nach einem der vorhergehenden Ansprüche,
**dadurch gekennzeichnet, daß** die Massagevorrichtung (8) und die Bürstvorrichtung (30) eine Roboterarm-Konstruktion (12, 23) umfassen, mittels der es möglich ist, ein Tier vom Kopf bis zum hinteren Ende automatisch zu massieren und/oder zu bürsten.

7. Vorrichtung nach Anspruch 6,
**dadurch gekennzeichnet, daß** das Massageelement (21) und die Bürste (44) nahe dem Ende der Roboterarm-Konstruktion angeordnet sind.

8. Vorrichtung nach Anspruch 7,
**dadurch gekennzeichnet, daß** das Massageelement (21) mit der Roboterarm-Konstruktion (12) über ein Gelenk (22) verbunden ist, so daß es in der Lage ist, sich den Unebenheiten des Körpers des Tieres anzupassen.

9. Vorrichtung nach Anspruch 8,
**dadurch gekennzeichnet, daß** das Gelenk (22) ein Kugelgelenk ist, das eine Anschlagvorrichtung umfaßt, mit deren Hilfe der Ausschlag des Massageelementes (21) relativ zu der Roboterarm-Konstruktion (12) begrenzt wird.

10. Vorrichtung nach einem der vorhergehenden Ansprüche,
**dadurch gekennzeichnet, daß** das Massageelement (21) eine profilierte Oberfläche aufweist.

11. Vorrichtung nach Anspruch 10,
**dadurch gekennzeichnet, daß** die profilierte Oberfläche durch Rippen und/oder Noppen (24) gebildet ist.

12. Vorrichtung nach einem der vorhergehenden Ansprüche,
**dadurch gekennzeichnet, daß** die Roboterarm-Konstruktion (12, 33) nahe der Seite der Melkbox (2) angeordnet ist.

13. Vorrichtung nach Anspruch 12,
**dadurch gekennzeichnet, daß** die Roboterarm-Konstruktion (12, 33) an dem Rahmen (3) der Melkbox (2) befestigt ist.

14. Vorrichtung nach einem der vorhergehenden Ansprüche,
**dadurch gekennzeichnet, daß** die Vorrichtung eine Längsführung (7, 31), wie z. B. eine Schiene, umfaßt, auf der die Massagevorrichtung (8) und/oder die Bürstvorrichtung (30) in Längsrichtung des Tieres bewegt werden kann.

15. Vorrichtung nach einem der vorhergehenden Ansprüche,
**dadurch gekennzeichnet, daß** die Massagevorrichtung (8) mit einer Antriebsvorrichtung (25) versehen ist, mit deren Hilfe das Massageelement (21) in Schwingungen versetzt werden kann.

16. Vorrichtung nach Anspruch 6 oder einem der Ansprüche 12 bis 14,
**dadurch gekennzeichnet, daß** nahe dem Ende der Roboterarm-Konstruktion (33) eine drehbar angetriebene Bürste (44) angeordnet ist.

17. Vorrichtung nach Anspruch 15 oder 16,
**dadurch gekennzeichnet, daß** die Bürste und das Massageelement (44, 21) mit veränderlicher Geschwindigkeit angetrieben werden können.

18. Vorrichtung nach einem der vorhergehenden Ansprüche,
**dadurch gekennzeichnet, daß** an beiden Seiten der Melkbox (2) eine Massagevorrichtung (8) und/oder eine Bürstvorrichtung (30) angeordnet sind/ist.

19. Vorrichtung nach einem der vorhergehenden Ansprüche,
**dadurch gekennzeichnet, daß** die Vorrichtung einen Computer umfaßt, der ermittelt, ob ein Tier viel oder wenig Bedarf daran hat, durch Bürsten über eine kurze oder lange Zeit massiert oder gereinigt zu werden.

20. Vorrichtung nach einem der vorhergehenden Ansprüche,
**dadurch gekennzeichnet, daß** die Vorrichtung einen Computer umfaßt, der derart programmiert ist, daß bekannt ist, ob die Kuh mehr oder weniger schnell gemolken wird, wenn sie gebürstet oder massiert wird oder nicht.

21. Vorrichtung nach einem der vorhergehenden Ansprüche,
**dadurch gekennzeichnet, daß** die Vorrichtung einen Computer umfaßt, der derart programmiert ist, daß er aufzeichnet, ob die Massage einen günstigeren Einfluß auf die Kuh ausübt als das Bürsten.

22. Vorrichtung nach einem der vorhergehenden Ansprüche,
**dadurch gekennzeichnet, daß** die Vorrichtung einen Computer umfaßt, der derart programmiert ist, daß auf der Basis von Milchproben festgestellt werden kann, ob die Massage und/oder das Bürsten einwandfrei ausgeführt werden/wird.

23. Verfahren zum Anregen der Milchproduktion eines Tieres,
bei dem nach Betreten einer Box durch ein Tier das Tier wahlweise zuerst automatisch mittels einer Massagevorrichtung (8) massiert oder zuerst gebürstet wird.

24. Verfahren nach Anspruch 23,
**dadurch gekennzeichnet, daß** während des Massierens und/oder Bürstens des Tieres Zitzenbecher an die Zitzen des zu melkenden Tieres angeschlossen werden und das Tier anschließend gemolken wird.

25. Verfahren nach Anspruch 23 oder 24,
**dadurch gekennzeichnet, daß** die Zitzenbecher mittels eines Melkroboters automatisch an die Zitzen des zu melkenden Tieres angeschlossen werden.

26. Verfahren nach einem der Ansprüche 23 bis 25,
**dadurch gekennzeichnet, daß** mittels der Massagevorrichtung (8) neben dem Euter das Tier massiert wird.

27. Verfahren nach einem der Ansprüche 23 bis 26,
**dadurch gekennzeichnet, daß** die Massagevorrichtung (8) das hintere Ende des Tieres massiert.

28. Verfahren nach einem der Ansprüche 23 bis 27,
**dadurch gekennzeichnet, daß** die Bürste (44) von der Oberseite des Rückens des Tieres nach unten bis zum Bauch des Tieres bewegt wird.

29. Verfahren nach Anspruch 28,
**dadurch gekennzeichnet, daß** die Drehzahl, mit der sich die Bürste (44) dreht, automatisch erhöht wird, wenn die Bürste (44) den Bauch des Tieres erreicht hat, und daß die Bürste (44) anschließend an dem Tier entlang zurück bis zur Oberseite seines Rückens bewegt wird.

30. Verfahren nach Anspruch 28 oder 29,
**dadurch gekennzeichnet, daß** die Massagevorrichtung (8) automatisch arbeitet, wobei die Dauer der Massage in Abhängigkeit von der Art des Tieres von dem Computer bestimmt wird.

## Revendications

1. Installation comportant une stalle (1) destinée à des animaux, tels que des vaches, comportant un organe de massage, **caractérisée en ce que** la stalle (1) comporte l'organe de massage (8) et un organe de brossage (30) pour masser ou brosser automatiquement un animal de manière simultanée et/ou alternée.

2. Installation selon la revendication 1, **caractérisée en ce que** l'organe de massage (8) est conçu d'une manière telle que l'animal est massé automatiquement au niveau de son côté supérieur et/ou côté inférieur et/ou côté arrière.

3. Installation selon l'une quelconque des revendications précédentes, **caractérisée en ce que** la stalle (1) comporte au moins un box de traite (2), et l'organe de massage (8) et/ou l'organe de brossage (30) sont/est disposé sur le box de traite (2) ou à proximité de celui-ci d'une manière telle qu'il va être possible de masser ou brosser l'extrémité arrière de l'animal.

4. Installation selon l'une quelconque des revendications précédentes, **caractérisée en ce que** l'organe de massage (8) comporte un élément de massage (21) qui est constitué d'un matériau souple, tel qu'un matériau synthétique ou du caoutchouc.

5. Installation selon l'une quelconque des revendications précédentes, **caractérisée en ce que** l'organe de massage et/ou de brossage (8, 30) comportent un dispositif (26) par l'intermédiaire duquel il va être possible, en saison froide, d'alimenter automatiquement de l'air chaud, de l'eau ou de l'huile pendant un massage et/ou brossage.

6. Installation selon l'une quelconque des revendications précédentes, **caractérisée en ce que** l'organe de massage (8) l'organe de brossage (30) comporte une structure formant bras de robot (12, 23) par l'intermédiaire de laquelle il va être possible de masser et/ou brosser un animal automatiquement de son extrémité avant vers son extrémité arrière.

7. Installation selon la revendication 6, **caractérisée en ce que** l'élément de massage (21) et la brosse (44) sont disposés à proximité de l'extrémité de la structure formant bras de robot.

8. Installation selon la revendication 7, **caractérisée en ce que** l'élément de massage (21) est connecté à la structure formant bras de robot (12) via une articulation (22), de manière à pouvoir s'adapter lui-même aux irrégularités du corps de l'animal.

9. Installation selon la revendication 8, **caractérisée en ce que** l'articulation (22) est une articulation sphérique comportant des moyens de butée à l'aide desquels l'impact autorisé à l'élément de massage (21) par rapport à la structure formant bras de robot (12) est limité.

10. Installation selon l'une quelconque des revendications précédentes, **caractérisée en ce que** l'élément de massage (21) a une surface profilée.

11. Installation selon la revendication 10, **caractérisée en ce que** la surface profilée est constituée de nervures et/ou protubérances (24).

12. Installation selon l'une quelconque des revendications précédentes, **caractérisée en ce que** la structure formant bras de robot (12, 33) est disposée à proximité du côté du box de traite (2).

13. Installation selon la revendication 12, **caractérisée en ce que** la structure formant bras de robot (12, 33) est fixée sur le châssis (3) du box de traite (2).

14. Installation selon l'une quelconque des revendications précédentes, **caractérisée en ce que** l'installation comporte des moyens de guidage longitudinaux (7, 31), tels qu'un rail, à travers lesquels l'organe de massage (8) et/ou l'organe de brossage (30) peuvent être déplacés dans la direction longitudinale de l'animal.

15. Installation selon l'une quelconque des revendications précédentes, **caractérisée en ce que** l'organe de massage (8) est muni de moyens d'entraînement (25) à l'aide desquels on peut faire vibrer l'élément de massage (21).

16. Installation selon la revendication 6 ou l'une quelconque des revendications 12 à 14, **caractérisée en ce qu'**une brosse entraînée de manière rotative (44) est disposée à proximité de l'extrémité de la structure formant bras de robot (33).

17. Installation selon la revendication 15 ou 16, **caractérisée en ce que** la brosse et l'élément de massage (44, 21) peuvent être entraînés à une vitesse variable.

18. Installation selon l'une quelconque des revendications précédentes, **caractérisée en ce que** un organe de massage (8) et/ou un organe de brossage (30) sont/est agencé des deux côtés du box de traite (2).

19. Installation selon l'une quelconque des revendications précédentes, **caractérisée en ce que** l'installation comporte un ordinateur qui établit si un animal a plus ou moins besoin d'être massé ou nettoyé par brossage pendant un temps court ou long.

20. Installation selon l'une quelconque des revendications précédentes, **caractérisée en ce que** l'installation comporte un ordinateur qui a été programmé d'une manière telle qu'on sait si la vache va être traite plus ou moins rapidement lorsqu'elle est brossée ou massée, ou pas.

21. Installation selon l'une quelconque des revendications précédentes, **caractérisée en ce que** l'installation comporte un ordinateur qui a été programmé de manière à enregistrer si le massage a une influence plus favorable sur la vache que le brossage.

22. Installation selon l'une quelconque des revendications précédentes, **caractérisée en ce que** l'installation comporte un ordinateur qui a été programmé d'une manière telle qu'il va être possible d'établir, sur la base d'échantillons de lait, si le massage et/ou le brossage sont/est effectué de manière satisfaisante.

23. Procédé de stimulation du débit du lait d'un animal, procédé dans lequel, après qu'un animal ait occupé le box, l'animal va d'abord facultativement être massé automatiquement par l'intermédiaire d'un organe de massage (8), ou va d'abord être brossé.

24. Procédé selon la revendication 23, **caractérisé en ce que**, pendant le massage et/ou brossage de l'animal, des gobelets trayeurs sont connectés aux trayons de l'animal à traire, et l'animal est trait consécutivement.

25. Procédé selon la revendication 23 ou 24, **caractérisé en ce que** les gobelets trayeurs sont connectés automatiquement aux trayons de l'animal à traire par l'intermédiaire d'un robot de traite.

26. Procédé selon l'une quelconque des revendications 23 à 25, **caractérisé en ce que** l'animal est massé à côté du pis par l'intermédiaire de l'organe de massage (8).

27. Procédé selon l'une quelconque des revendications 23 à 26, **caractérisé en ce que** l'organe de massage (8) masse l'extrémité arrière de l'animal.

28. Procédé selon l'une quelconque des revendications 23 à 27, **caractérisé en ce que** la brosse (44) est déplacée à partir du côté supérieur du dos de l'animal vers le bas jusqu'à l'abdomen de l'animal.

29. Procédé selon la revendication 28, **caractérisé en ce que**, après que la brosse 44 ait atteint l'abdomen de l'animal, le nombre de tours au niveau duquel la brosse (44) est mise en rotation est augmenté automatiquement, et la brosse (44) est ensuite déplacée en arrière le long de l'animal jusqu'au côté supérieur de son dos.

30. Procédé selon la revendication 28 ou 29, **caractérisé en ce que** l'organe de massage (8) masse automatiquement, tandis que la durée de massage est définie par ordinateur, selon le type d'animal.
